# EUROPÄISCHE PATENTSCHRIFT

(11) **EP 1 838 949 B1**
(45) Veröffentlichungstag und Bekanntmachung des Hinweises auf die Patenterteilung: **28.09.2011**
(21) Anmeldenummer: 07702899.1
(22) Anmeldetag: 19.01.2007
(51) Int. Cl.: F01C 1/107

(54) **VERFAHREN ZUM UMWANDELN THERMISCHER ENERGIE IN MECHANISCHE ARBEIT SOWIE BRENNKRAFTMASCHINE**
METHOD FOR CONVERTING THERMAL ENERGY INTO MECHANICAL WORK, AND INTERNAL COMBUSTION ENGINE
PROCEDE DE CONVERSION D'ENERGIE THERMIQUE EN TRAVAIL MECANIQUE ET MOTEUR A COMBUSTION INTERNE

(30) Priorität: 20.01.2006 DE 102006002925
(43) Veröffentlichungstag der Anmeldung: 03.10.2007
(73) Patentinhaber: META MOTOREN- UND ENERGIE-TECHNIK GMBH, D-52134 Herzogenrath (DE)
(72) Erfinder: KREUTER, Peter, 52072 Aachen (DE)
(74) Vertreter: Kramer - Barske - Schmidtchen
(86) Internationale Anmeldenummer: PCT/EP2007/000470
(87) Internationale Veröffentlichungsnummer: WO 2007/085386

(56) Entgegenhaltungen:
- DE-A1- 3 231 157
- DE-A1- 3 737 125
- US-A- 3 937 185
- US-A- 4 040 400
- US-A- 4 617 886
- US-A- 6 065 874
- US-B1- 6 336 317

## Beschreibung

Die Erfindung betrifft ein Verfahren zum Umwandeln thermischer Energie in mechanische Arbeit sowie eine Brennkraftmaschine.

Herkömmliche Hubkolbenbrennkraftmaschinen, bei denen sich einzelne Kolben innerhalb ihnen zugeordneter Zylinder bewegen, haben Wirkungsgradeinbußen unter anderem deshalb, weil die Wandtemperatur des Brennraums nur begrenzt an jeweilige Erfordernisse angepasst werden kann, wodurch hohe Wärmeverluste entstehen und die im Abgas enthaltene Energie nur begrenzt genutzt werden kann.

Bei einem Kreiskolben- oder Wankelmotor, bei dem der Arbeitsraum entsprechend der Bewegung des Drehkolbens innerhalb des Gehäuses umläuft, verändern sich zwar die den Arbeitsraum begrenzenden Innenwandbereiche des Motorgehäuses; die den Arbeitsraum begrenzende Kolbenfläche bleibt jedoch während eines Umlaufes des Arbeitsraumes, d.h. beispielsweise während der vier Arbeitstakte, ständig gleich.

Beispielsweise beschreibt die US 3,937,185 A einen Kreiskolbenmotor, längs dessen Gehäuse Kühlwasser insbesondere in dem Bereich strömt, in dem die Zündkerzen bzw. die Brennkammer angeordnet sind. Abgas wird durch einen Abgaskanal ausgeleitet.

Die US 6,336,317 B1 beschreibt ein Verfahren zum Umwandeln thermischer Energie in mechanische Arbeit, bei dem Umgebungsluft in einem Kompressor komprimiert wird und dann in einem Gegenstrom in einem Regenerator erhitzt wird, wobei die thermische Energie von Abgasen verwendet wird. In einem Brenner wird Kraftstoff in die vorgewärmte Luft eingeleitet und gezündet. Die unter hohem Druck stehenden Verbrennungsgase strömen in einen Expander, in dem mechanische Arbeit erzeugt wird. Nachdem die Luft im Expander expandiert ist, strömt die warme Luft durch den Regenerator und heizt die aus dem Kompressor kommende, zum Brenner strömende Luft vor. Die Luft verlässt den Regenerator als Abgas.

Die US 4,040,490 A beschreibt eine Brennkraftmaschine, bei der die Verbrennung unterstützende Luft im Wesentlichen isotherm komprimiert wird und dann von heißen Abgasen erwärmt wird. Ein Teil der komprimierten heißen Luft wird abgezweigt, um Kraftstoff vorzuerhitzen und zu verdampfen und/oder zu komprimieren. Der restliche Teil der Luft und brennbares Gas werden voneinander getrennt in im Wesentlichen stichometrischen Mengen einem Brennerventil zugeführt, darin gemischt und durch Selbstentzündung unter vermindertem Zutritt von Luft und ohne Druckerhöhung verbrannt.

Die US 4,617,886 A beschreibt eine Brennkraftmaschine mit einem Gehäuse, das aus zwei kreiszylindrischen Segmenten zusammengesetzt ist, die an Verengungsstellen ineinander übergehen. Ein Rotor ist koaxial zu einem der Kreissegmente des Gehäuses angeordnet und weist etwa radial gerichtete Durchgangsöffnungen auf, in denen Kolben beweglich sind, deren Stellung von Pleueln bestimmt wird, die mit einem Ring starr verbunden sind, der koaxial zu dem anderen Kreissegment des Gehäuses angeordnet ist. Die Pleuel enden in Endbauteilen, die sich unter Abdichtung längs der Innenseite des einen Kreissegmentes bewegen. Radial außerhalb der Kolben sind Arbeitskammern gebildet, die durch eine relativ zum Kolben bewegliche Trennwand getrennt sind, solange der jeweilige Kolben das eine Kreissegment des Gehäuses überstreicht. Wenn sich ein Kolben längs der Innenseite des einen Kreissegments bewegt, nimmt das Volumen zwischen der Innenseite des Kreissegments und dem Kolben gebildeten Arbeitskammern zunächst unter Ansaugen von Brenngas und Frischluft zu und dann ab. Nach Überfahren einer Verengung am Übergang zwischen den beiden Kreissegmenten wird eine Verbindung zwischen den Arbeitskammern freigegeben, so dass maximal verdichtetes Gemisch von einer Zündkerze gezündet wird und die Expansion des brennenden Gemisches den Rotor drehantreibt. Sobald der Kolben ein in Drehrichtung des Rotors vor der überfahrenen Verengung liegendes Ende des anderen Kreissegments erreicht, kann verbranntes Gas aus dem Gehäuse ausströmen.

Der Erfindung liegt die Aufgabe zugrunde, ein Verfahren zum Umwandeln von thermischer Energie in mechanische Arbeit zu schaffen, das mit verbessertem Wirkungsgrad arbeitet. Der Erfindung liegt weiter die Aufgabe zugrunde, eine Brennkraftmaschine mit verbessertem Wirkungsgrad zu schaffen.

Der erstgenannte Teil der Erfindungsaufgabe wird mit den Merkmalen des Anspruchs 1 gelöst, in dessen Oberbegriff von einem Drehkolbenmotor ausgegangen wird. Dadurch, dass das aus der Arbeitskammer beziehungsweise dem Gehäuse ausströmende Abgas gezielt längs der Außenseite des Gehäuses geführt wird und zumindest ein Teil der im Abgas enthaltenen thermischen Energie der Arbeitskammer nach Ende der Verdichtungsphase bzw. zwischen der Verdichtungsphase und der Arbeits- bzw. Expansionsphase zugeführt wird, wird dieser rückgewonnene Teil der Abgasenergie effizient zur Verbesserung des Wirkungsgrades der Brennkraftmaschine genutzt.

Die Unteransprüche 2 bis 8 sind auf vorteilhafte Durchführungsformen des erfindungsgemäßen Verfahrens gerichtet.

Der zweite Teil der Erfindungsaufgabe wird mit einer Brennkraftmaschine gemäß dem Anspruch 9 gelöst.

Ein grundsätzlicher Vorteil der erfindungsgemäßen Brennkraftmaschine gegenüber bisher bekannten Brennkraftmaschinen liegt darin, dass sich die zyklisch durch das Gehäuse bewegende Arbeitskammer in ihren unterschiedlichen Funktionalitäten sowohl an unterschiedliche Bereiche der Innenwand des Gehäuses als auch der Umfangsbereiche verschiedener Kolben, die insgesamt eine bewegliche Wand bilden, angrenzen, wodurch es möglich ist, die Arbeitstemperaturen der entsprechenden Bereiche auf thermodynamisch günstigen Werten zu halten. Weiter können durch zweckentsprechende Gestaltung der nebeneinander geordneten, durch die Kurbelwelle gebildeten Exzenterscheiben, wie deren Exzentrizität und deren winkeligen Versatz, sowohl die Geschwindigkeit der sich bewegenden Arbeitskammern als auch deren Volumina bzw. Volumenveränderung zweckentsprechend an die thermodynamischen Erfordernisse angepasst werden.

Die Unteransprüche 10 bis 18 sind auf vorteilhafte Ausgestaltungen der erfindungsgemäßen Brennkraftmaschine gerichtet.

Die Erfindung wird im Folgenden beispielsweise und mit weiteren Einzelheiten erläutert.

In den Figuren stellen dar:
- Figur 1: einen Längsschnitt durch eine erfindungsgemäße Brennkraftmaschine,
- Figur 2: eine perspektivische Ansicht einer Kurbelwelle,
- Figur 3: eine perspektivische Ansicht eines Scheibenkolbens,
- Figur 4: eine perspektivische Ansicht zur Erläuterung der Führung der Scheibenkolben auf der Kurbelwelle,
- Figur 5: einen Querschnitt durch die erfindungsgemäße Brennkraftmaschine in einer senkrecht zur Achse der Kurbelwelle gerichteten Ebene,
- Figur 6: Schnitte ähnlich der Figur 1 zur Erläuterung der Arbeitsweise der erfindungsgemäßen Brennkraftmaschine,
- Figur 7: eine schematische Darstellung der Nutzung der Abgaswärme,
- Figuren 8 bis 10: Beispiele der Geometrie der Führung der Kolben an der Kurbelwelle,
- Figuren 11 und 12: perspektivische Darstellungen von Teilen der Führung der Scheibenkolben an Gleitscheiben,
- Figuren 13 bis 17: Beispiele von Abdichtungen zwischen benachbarten Scheibenkolben; und
- Figuren 18 bis 20: Beispiele der Abdichtung zwischen den Scheibenkolben und dem Gehäuse.

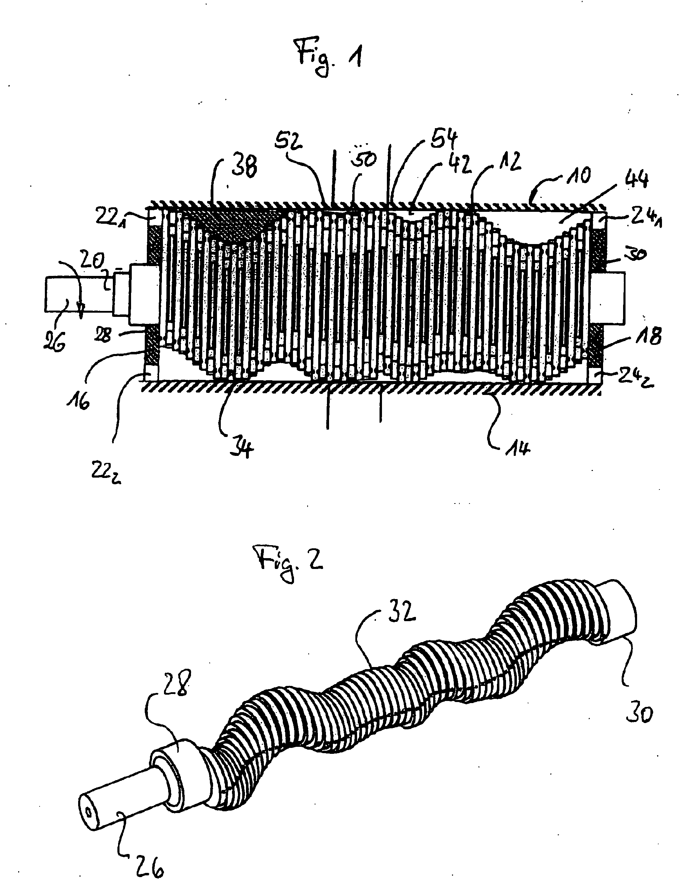

Gemäß den Figuren 1 bis 6 enthält die erfindungsgemäße Brennkraftmaschine ein Gehäuse 10, das im dargestellten Beispiel im Querschnitt rechteckig ist und eine Oberwand 12 aufweist, die mit einer Unterwand 14 über nicht dargestellte Seitenwände verbunden ist. An beiden Stirnseiten ist das Gehäuse 10 durch je eine Stirnwand 16 und 18 abgeschlossen, in denen eine sich durch das Gehäuse 10 hindurcherstreckende, insgesamt mit 20 bezeichnete Kurbelwelle gelagert ist.

Die Stirnwand 16 weist in ihrem oberen Bereich und ihrem unteren Bereich jeweils eine Einlassöffnung 22, bzw. 22₂ auf. Ähnlich weist die Stirnwand 18 in ihrem oberen und unteren Bereich je eine Auslassöffnung 24₁ bzw. 24₂ auf.

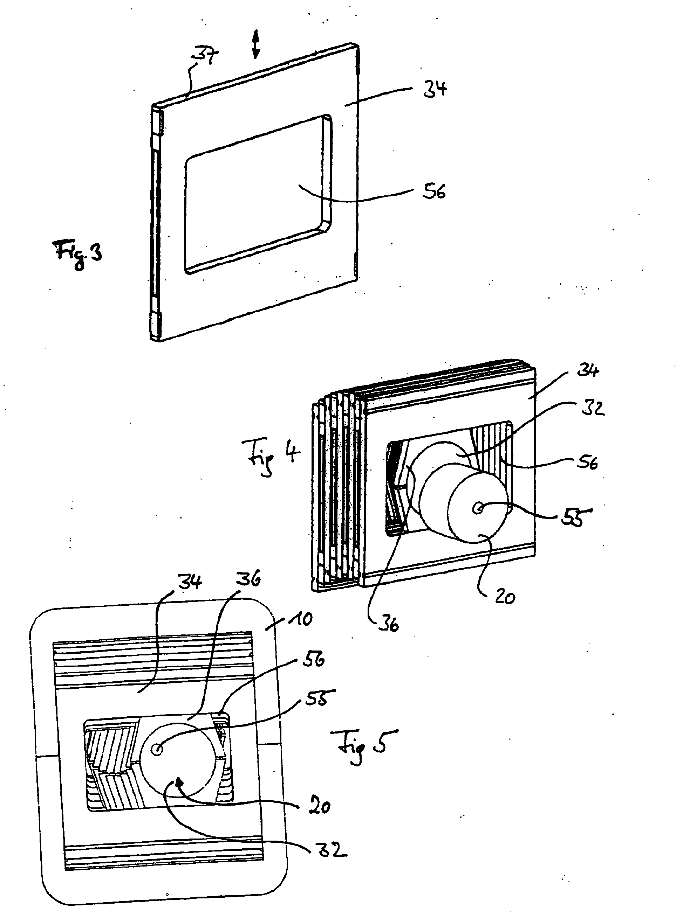

Figur 2 zeigt die Kurbelwelle 20 in perspektivischer Darstellung. Sichtbar ist der Abtriebslagerzapfen 26, der konzentrisch zu den Lagerflächen 28 und 30 ist, mit denen die Kurbelwelle in den Stirnwänden 16 und 18 (Figur 1) gelagert ist. Die Kurbelwelle weist axial benachbarte, winkelig zueinander versetzte Exzenterscheiben 32 unterschiedlicher Exzentrizität auf. Auf diesen Exzenterscheiben sind Scheibenkolben 34 (Figur 3) angeordnet, die auf der jeweils zugehörigen Exzenterscheibe mittels Gleitelementen 36 (Figuren 4 und 5) in Richtung des Abstandes zwischen den Seitenwänden des Gehäuses 10 bzw. parallel zur Erstreckungsrichtung der Seitenwände des Gehäuses verschiebbar geführt sind.

Figur 1 zeigt die Anordnung der Scheibenkolben 34 in einer Drehstellung der Kurbelwelle 20. Die Scheibenkolben 34, deren Breite dem Abstand zwischen den Seitenwänden des Gehäuses 10 entspricht, bewegen sich bei einer Drehung der Kurbelwelle 20 entsprechend den Exzentrizitäten der Exzenterscheiben 32 und deren winkeligem Versatz. Die Höhe der Scheibenkolben 34 ist derart auf die Exzentrizität der jeweils zugehörigen Exzenterscheiben abgestimmt, dass der jeweilige Scheibenkolben mit seinem Oberrand 37 (Figur 3) in Anlage an die Unterseite der Oberwand 12 des Gehäuses kommt, wenn die Exzentrizität der Exzenterscheibe gemäß Figur 1 senkrecht nach oben gerichtet ist, und mit seinem Unterrand in Anlage an die Oberseite der Unterwand 14 des Gehäuses kommt, wenn die Exzentrizität gemäß Figur 1 senkrecht nach unten gerichtet ist. In der Darstellung der Figur 1 sind über der Kurbelwelle zwischen den Oberseiten bzw. Oberrändern der Scheibenkolben 34 und dem Gehäuse 10 Arbeitskammern gebildet, die ein Ansaugvolumen 38, ein Verdichtungsvolumen 40, ein Arbeitsvolumen 42 und ein Ausstoßvolumen 44 bilden, wobei diese Volumina durch die Exzentrizitäten der Exzenterscheiben 32, deren winkeligen Versatz und die an die Exzentrizitäten angepasste unterschiedliche Höhe der Scheibenkolben definiert sind.

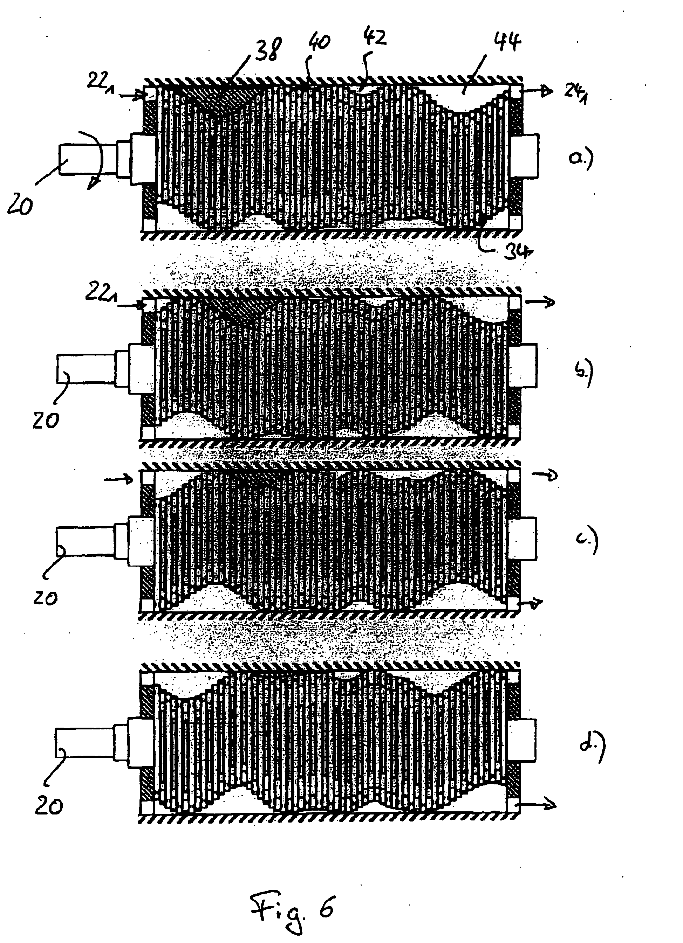

Figur 6 zeigt vier unterschiedliche Drehstellungen der Kurbelwelle 20 mit den zugehörigen Volumina. Die Drehstellung a) entspricht etwa der Darstellung gemäß Figur 1. Das Ansaugvolumen 38 ist nach links zu der Einlassöffnung 22, hin durch wenigstens einen, in seiner oberen Totpunktstellung befindlichen Scheibenkolben 34 abgeschlossen und nach rechts ebenfalls durch wenigstens einen in seiner oberen Totpunktstellung befindlichen Scheibenkolben abgeschlossen. Ähnliches gilt für das Verdichtungsvolumen 40 und das Arbeitsvolumen 42. Das Ausstoßvolumen 44 ist nach rechts hin zur Auslassöffnung 24₁ offen, da sich der gemäß Figur 6a) rechteste Scheibenkolben aus seiner oberen Totpunktstellung bereits nach unten bewegt hat.

In der Stellung b) hat sich die Kurbelwelle 20 gegenüber der Stellung a) um etwa 90° gedreht. Dies führt dazu, dass sich nach links hin zur Einlassöffnung 22₁ ein neues Volumen öffnet, wohingegen das Ansaugvolumen 38 unter Verminderung seiner Größe sich nach rechts bewegt, ähnlich wie sich das Verdichtungsvolumen 40 ohne wesentliche Volumenänderung weiter nach rechts bewegt, sich das Arbeitsvolumen 42 unter Vergrößerung nach rechts bewegt und das Ausstoßvolumen 44 unter Verringerung seines Volumens nach rechts bewegt.

In der Stellung gemäß Figur 6c) hat sich die Kurbelwelle gegenüber der Stellung gemäß Figur 6a) um 180° gedreht. Die Volumina sind weiter nach rechts gewandert, wobei ganz links ein neues Ansaugvolumen seine Größe vergrößert, rechts davon das ehemalige Ansaugvolumen abnimmt, weiter rechts die Größe des ehemaligen Verdichtungsvolumens leicht zunimmt, noch weiter rechts das ehemalige Arbeitsvolumen weiter zunimmt und noch weiter rechts das ehemalige Ausstoßvolumen abnimmt.

In der Stellung gemäß Figur 6d) hat sich die Kurbelwelle 20 um weitere 90° gedreht und haben sich die Volumina entsprechend weiter verändert, wobei das ehemalige Arbeitsvolumen 42 sein Maximum hat und von der Auslassöffnung 24₁ noch getrennt ist.

Wenn sich die Kurbelwelle aus der Stellung gemäß Figur 6d) um weitere 90° dreht, ist der Zustand gemäß Figur 6a) wiederum erreicht.

Wie ersichtlich, sind bei dem erfindungsgemäßen Motor über der Kurbelwelle und dem Gehäuse durch die insgesamt eine bewegliche Wand bildenden Oberseiten der Scheibenkolben im Zusammenwirken mit den sich drehenden Exzentrizitäten jeweils vier sich in axialer Richtung entsprechend der Drehung der Kurbelwelle im dargestellten Beispiel von links nach rechts bewegende Arbeitskammern gebildet, deren Volumina und deren axiale Lage sich mit der Drehung der Kurbelwelle verändern, wobei beispielhaft die linke Arbeitskammer beginnend etwas vor der Drehstellung der Figur 6b) ein zunehmendes Ansaugvolumen bildet, das dann bis zu einem minimalen Verdichtungsvolumen abnimmt und anschließend, beispielsweise dadurch, dass im Verdichtungsvolumen komprimierte Luft zusammen mit Kraftstoff verbrennt, zum Arbeitsvolumen zunimmt, das bei Erreichen seines maximalen Wertes zur Auslassöffnung hin öffnet und ein sich verkleinerndes Ausstoßvolumen bildet. Ein Zyklus dauert 360°, d.h. eine volle Kurbelwellenumdrehung.

Die Gemischbildung kann sowohl extern als auch intern erfolgen, wobei eine Direkteinspritzung in das Verdichtungsvolumen möglich ist, und ein ottomotorischer sowie dieselmotorischer Betrieb erfolgen kann.

Die Größen der einzelnen maximalen und minimalen Volumina, die Wanderungsgeschwindigkeit längs des Gehäuses usw. können durch zweckentsprechende Ausbildung der Kurbelwelle und der im dargestellten Beispiel rechteckigen Kolben an die jeweiligen Erfordernisse angepasst werden.

Bei der erfindungsgemäßen Brennkraftmaschine erfolgt das Ansaugen, das Komprimieren, die Ladungsumsetzung unter Arbeitsleistung und das Ausstoßen der Abgase an unterschiedlichen Orten des Gehäuses und mit unterschiedlichen Scheibenkolben.

Wie aus der Figur 6 unmittelbar ersichtlich, ist das dargestellte Beispiel des erfindungsgemäßen Motors "doppelt wirkend", weil sich nicht nur oberhalb der Kurbelwelle sondern auch unterhalb der Kurbelwelle Arbeitskammern unter Volumenveränderung axial längs des Gehäuses bewegen. Der Betrieb der beiden, auf diese Weise geschaffenen Motoren ist um 180° phasenverschoben.

Ein vorteilhaftes Merkmal der beschriebenen Maschine liegt darin, dass das Verdichtungsvolumen 40 bei seiner Bewegung längs einer gewissen axialen Strecke im Wesentlichen auf seinem minimalen Wert konstant bleibt, bevor es zum Ausgangspunkt des sich dann unter Verbrennung der Frischladung vergrößernden Arbeitsvolumen wird.

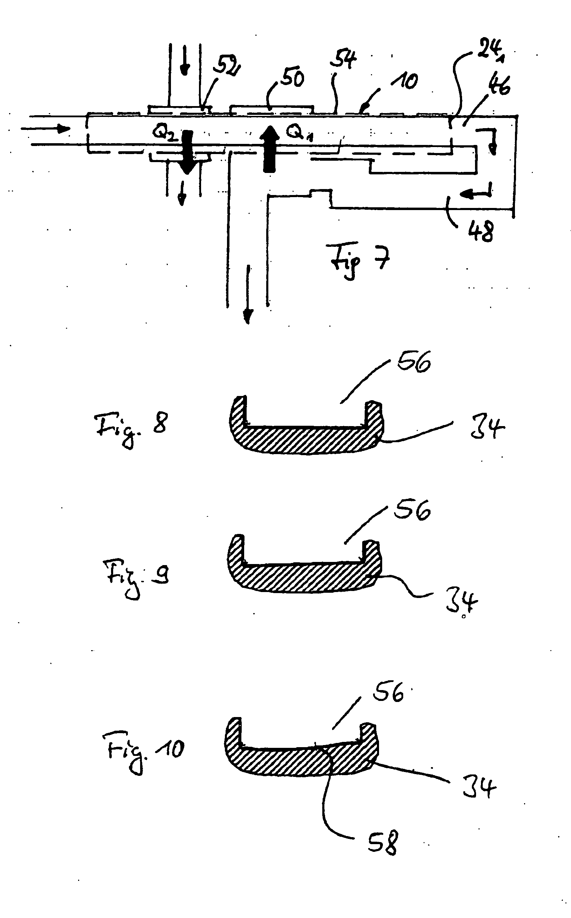

Mit dem erfindungsgemäßen Motor kann der Wirkungsgrad der Umwandlung thermischer Verbrennungsenergie in mechanische Nutzarbeit, wie in Figur 7 skizziert, vergrößert werden:

In Figur 7 ist das Gehäuse 10 schematisch gestrichelt dargestellt. Der obere, von links nach rechts gerichtete Ladungspfad 46 stellt die Bewegung der Ladung längs des Motorgehäuses 10 dar, wobei die verbrannte Ladung den Motor durch die Auslassöffnung 24₁ bzw. die Auslassöffnungen 24₁ und 24₂ als heißes Abgas verlässt, das längs eines Abgaspfades 48 zur Außenseite des Gehäuses 10 in einen Wärmetauscherbereich 50 geführt wird, der zwischen dem Verdichtungsbereich 52 (Fig. 1), in dem die Frischladung geometrisch maximal verdichtet ist, und dem Verbrennungsbereich 54 angeordnet ist, in dem die Verbrennung der Frischladung, der zusätzlich die Abgasenergie zugeführt wurde, beginnt. Die verdichtete Ladung wird längs des Wärmetauscherbereiches 50 im Wesentlichen ohne Volumenänderung vom Verdichtungsbereich 52 zum Verbrennungsbereich 54 transportiert, wobei sich das in diesem Bereich sehr kleine Volumen der Arbeitskammer durch zweckentsprechende Ausbildung der Exzenterscheiben mit kleiner Exzentrizität und entsprechend hoher Ausbildung der Scheibenkolben von links nach rechts bewegt.

Während das Gehäuse, insbesondere in den Bereichen, in denen die Verbrennung und die anschließende Volumenverkleinerung der Arbeitskammer zum Ausstoß der verbrannten Ladung erfolgt, derart ausgebildet ist, dass möglichst kein Wärmetausch mit der Umgebung erfolgt, ist es im Wärmetauscherbereich 50 derart ausgebildet, dass ein möglichst großer Teil Q₁ der im heißen Abgas enthaltenen Energie in die wandernde, verdichtete Frischladung eingetragen wird. Durch diesen Wärmetausch wird die im Abgas enthaltene thermische Energie zur Vergrößerung der bei der Verbrennung erfolgenden Umsetzung der Verbrennungsenergie in mechanische Energie deutlich vergrößert.

Des Weiteren ist es vorteilhaft, den Verdichtungsbereich 52 des Gehäuses 10 zu kühlen, beispielsweise durch Wärmetausch mit dem Kühlmedium der Maschine oder mit Luft und aus der verdichteten Ladung eine Wärmemenge Q₂ in das Kühlmedium abzuführen. Damit wird die zu leistende Verdichtungsarbeit vermindert. Somit ist es vorteilhaft die Gehäusewandung derart auszubilden, dass sie im Verdichtungsbereich 52 einen Wärmetausch mit dem Kühlmittel und im Wärmetauscherbereich 50 einen Wärmetausch mit dem Abgas zulässt.

Im Folgenden werden weitere vorteilhafte konstruktive Einzelheiten der erfindungsgemäßen Brennkraftmaschine erläutert:
Die mit den spiralförmig angeordneten Exzenterscheiben 32 ausbildete Kurbelwelle 20 kann einteilig oder mehrteilig, d.h. gebaut, hergestellt werden. Der Antrieb von Nebenaggregaten kann unmittelbar von der Kurbelwelle her erfolgen, durch die hindurch auch die Druckölversorgung der Gleitelemente 36 mittels einer Axialbohrung 55, die beispielsweise in der Kurbelwellendrehachse verläuft, erfolgen kann, um die Gleitführung zwischen den Scheibenkolben und den Gleitelementen zu schmieren.

Das Gehäuse 10 kann erforderlichenfalls mit Zwischenwänden versehen werden, in denen die Kurbelwelle zusätzlich gelagert werden kann.

Die Scheibenkolben 34 sind vorteilhafterweise rechteckig (Figur 3) ausgebildet und weisen, wie aus Figuren 4 bis 6 ersichtlich, eine zentrale, ebenfalls bevorzugt rechteckige Öffnung 56 auf, in der die Gleitelemente 36 geführt sind. Die Gleitflächen, längs denen die Gleitelemente 36 geführt sind, müssen nicht zwangsläufig rechteckig sein, wie in Figur 8 dargestellt, sondern können auch als Parallelogramm ausgebildet sein, wie in Figur 9 angedeutet. Die Führungsflächen 58 für die Gleitelemente können auch gekrümmt mit Abflachungen oder sonstwie in geeigneter Weise ausgebildet sein, wie in Figur 10 dargestellt. Es versteht sich, dass die Übersetzung der Exzentrizität in eine Auf- und Abwärtsbewegung des Kolbens sich mit dem Winkel der Führungsfläche 58 zu den Seitenwänden des Gehäuses ändert.

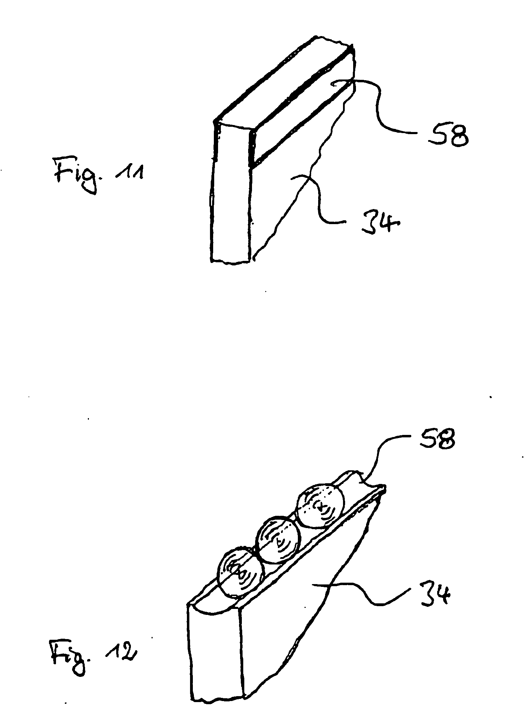

Die Führung bzw. Lagerung der Gleitelemente in der zentralen Öffnung 56 der Scheibenkolben 34 bzw. an den Führungsflächen 58 kann eine einfache Schiebelagerung sein, wobei die Gleitflächen vorteilhafterweise mit reibungsarmem Material beschichtet sind (Figur 11). Die Lagerung kann auch als Wälzlagerung ausgebildet sein, wie in Figur 12 dargestellt.

An die Scheibenkolben 34 werden vielfältige Anforderungen hinsichtlich deren Temperaturfestigkeit, mechanischer Belastbarkeit, thermischen Eigenschaften usw. gestellt. Die Scheibenkolben müssen insbesondere im Bereich der Verbrennung sowohl axiale Kräfte als auch senkrecht zur Kurbelwelle gerichtete Kräfte aushalten, wobei die letzteren in eine Umdrehung der Kurbelwelle umgesetzt werden.

Neben den genannten Eigenschaften, aufgrund derer die Scheibenkolben aus unterschiedlichen Materialien gebaut werden können, ist die gegenseitige Abdichtung der Scheibenkolben aneinander sowie der Ränder der Scheibenkolben an den Seitenwänden des Gehäuses und der Unterseite der Oberwand 12 des Gehäuses sowie der Oberseite der Unterwand 14 des Gehäuses wichtig.

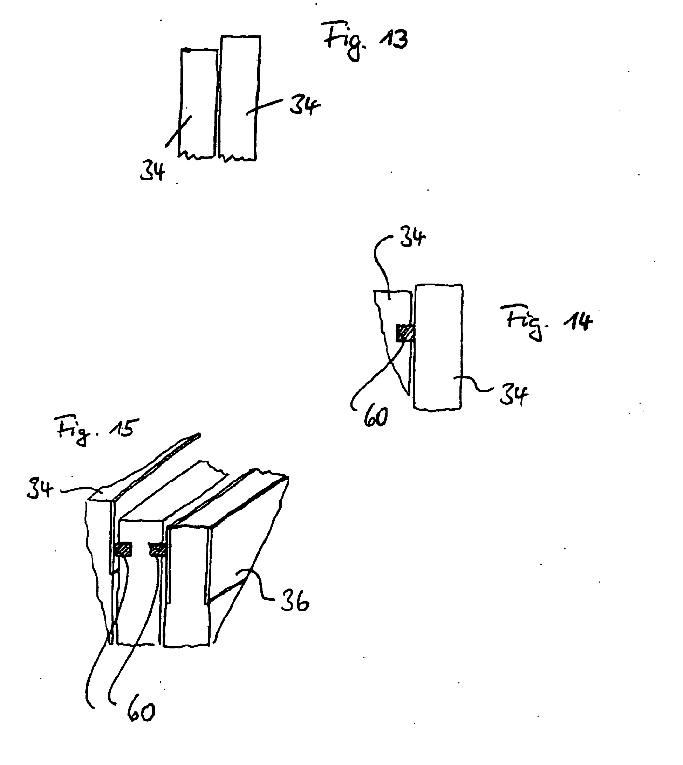

Die Abdichtung zwischen den Scheibenkolben kann, wie in Figur 13 dargestellt, durch eine einfache großflächige Anlage erfolgen. Die Relativgeschwindigkeiten zwischen benachbarten Scheibenkolben sind relativ gering. Die Bewegung der Scheibenkolben längs des Gehäuses ist dagegen größer. Der jeweils stirnseitig letzte Scheibenkolben bestimmt den Beginn des Ansaugens bzw. den Beginn des Ausstoßens der verbrannten Ladung.

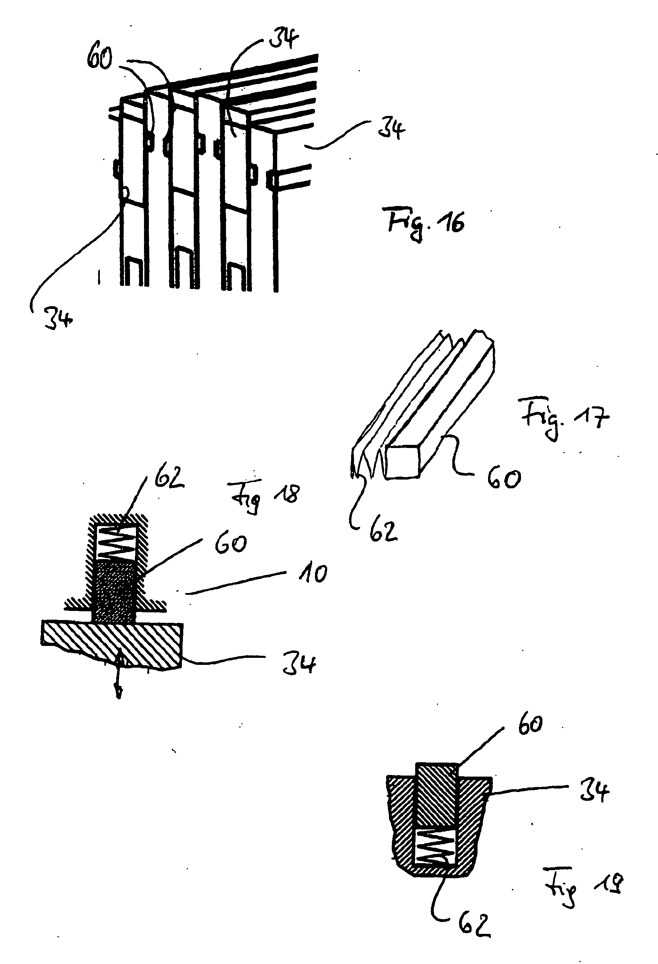

Für die Abdichtung zwischen den Scheibenkolben 34 können, wie in Figur 14 dargestellt, Dichtleisten 60 verwendet werden, wobei beispielsweise eine Dichtleiste 60 in jedem linksseitig eines rechtsseitigen Scheibenkolbens angeordneten Kolben aufgenommen sein kann, die zusätzlich elastisch gemäß Figur 14 nach rechts vorgespannt sein können. Bei einer anderen Anordnung, die in Figuren 15 und 16 dargestellt ist, ist jeder übernächste Scheibenkolben 34 mit zwei Dichtleisten 60 versehen, die gegen den jeweils benachbarten Kolben dichten.

Figur 17 zeigt eine Dichtleiste 60, die von einer Feder 62 elastisch vorgespannt ist. Es versteht sich, dass kombinierte Dichtsysteme mit Dichtleisten und Spaltdichtsystemen und/oder Labyrinthdichtsystemen eingesetzt werden können.

Die Scheibenkolben 34 müssen zusätzlich unter Abdichtung gleitend an den Seitenwänden des Gehäuses geführt sein und in ihrem oberen bzw. unteren Totpunkt unter Abdichtung an der jeweiligen Gegenseite des Gehäuses anliegen. Dazu können gemäß Figur 18 Dichtleisten verwendet werden, die in einer Ausnehmung des Gehäuses 10 aufgenommen und mittels einer Feder 62 elastisch vorgespannt sind. Alternativ können die Dichtleisten gemäß Figur 19 in den Scheibenkolben 34 aufgenommen sein und von einer Feder 62 elastisch in Richtung auf das Gehäuse vorgespannt sein. Weiter ist es möglich, eine membranartige Wand 64 des Gehäuses elastisch in Richtung auf die Kolben 34 vorgespannt auszubilden, so dass eine elastisch dichtende Anlage gegeben ist.

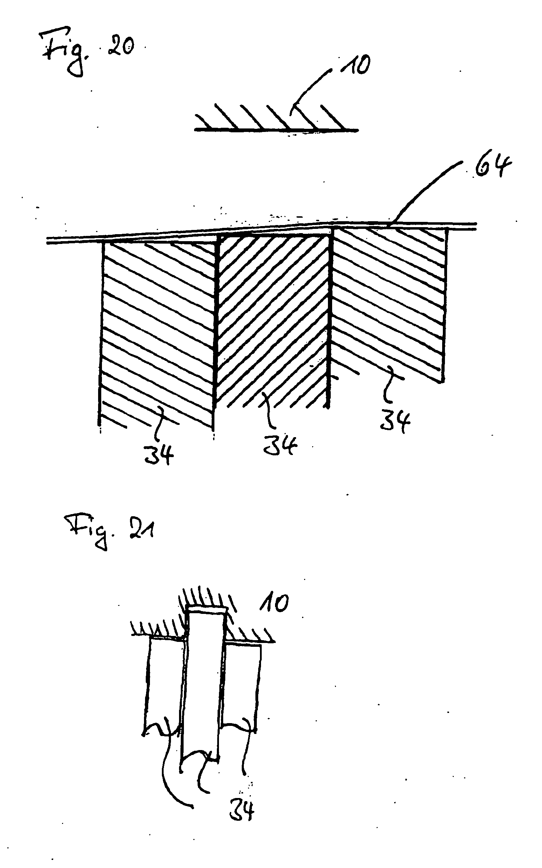

Gemäß Figur 20 können alternativ oder zusätzlich die Oberränder und gegebenenfalls die Unterränder der Scheibenkolben 34 von einer elastischen Membran 64 überspannt sein, die z.B. an dem gemäß Fig. 1 linksseitigsten und rechtsseitigsten Scheibenkolben und an den Scheibenkolben, über denen Unterdruck vorherrschen kann, befestigt ist und eine Abdichtung der Scheibenkolben gegeneinander überflüssig macht. Die Membran 64, die beispielsweise eine elastische Metallfolie sein kann, muss nicht alle Kolben 34 überspannen. Sie kann vielmehr entsprechend der thermischen Beanspruchung in den unterschiedlichen funktionalen Bereichen unterschiedlich ausgebildet sein. Beispielsweise kann sie im Ansaug- und Verdichtungsbereich, die kalt bleiben, durch eine Kunststoffmembran gebildet sein, die insbesondere im Ansaugbereich an den an die Arbeitskammer grenzenden Rändern der Kolben 34 befestigt sein, so dass ein wirksames Ansaugen sichergestellt ist. Es versteht sich, dass beim Vorhandensein der Membran 64 diese in der oberen Totpunktstellung des jeweiligen Scheibenkolbens jeweils in direkte Anlage an die Innenwand des Gehäuses 10 bzw. eine gegebenenfalls dort vorgesehene Dichtleiste kommt.

Gemäß Figur 21, die einen gemäß Figur 1 waagerechten Schnitt durch einen Teil der Brennkraftmaschine in einer Ebene unterhalb der Arbeitskammern bzw. der hinsichtlich der Abdichtung der Arbeitskammern erforderlichen Dichtleisten der Scheibenkolben zeigt, können die dichtenden Eingriffe zwischen den Scheibenkolben 34 und den Seitenwänden des Gehäuses 10 gegeneinander versetzt sein, wodurch neben Dichtungsvorteilen wegen des Labyrinths eine zusätzliche Stabilisierung der Kolben gegen Axialkräfte erreicht wird. Die Konstruktion kann derart sein, dass im Wesentlichen nur die Führung der Scheibenkolben im Hinblick auf deren Stabilität gegenüber Axialkräften verbessert ist.

Die Gleitelemente 36, über die die Exzenterscheiben 32 der Kurbelwelle 20 mit den Scheibenkolben 34 verbunden sind, können einteilig oder mehrteilig ausgebildet sein. Figur 4 zeigt eine zweiteilige Ausbildung der Gleitelemente. Die einzelnen Teile eines Gleitelements können miteinander verschraubt oder lediglich durch Formschluss miteinander verbunden sein.

Die Lagerung zwischen den Gleitelementen und den Exzenterscheiben ist vorteilhafterweise als Gleit- oder Wälzlagerung oder Kombination beider ausgeführt.

Das Linearlager, über das die Scheibenkolben an dem Gleitelement geführt sind, kann ebenfalls als Gleit- oder Wälzlager oder als Kombination beider ausgeführt sein. Die gegenseitige axiale Abstützung kann jeweils an den Nachbarelementen und schließlich den Stirnwänden des Gehäuses erfolgen oder unmittelbar an der Kurbelwelle.

Das Gehäuse 10 dient der Führung der Scheibenkolben und der Abdichtung der sich durch das Gehäuse hindurchbewegenden Arbeitskammer. Das Gehäuse kann ein- oder mehrteilig ausgeführt sein. Die Einlass- und Auslassöffnungen können Steuerkanten bilden. Weiter können an dem Gehäuse im Verbrennungsbereich eine oder mehrere Einspritzdüsen sowie bei ottomotorischem Betrieb wenigstens eine Zündkerze angeordnet sein.

Neben der Lagerung der Kurbelwelle kann das Gehäuse auch zur Aufnahme axialer, auf die Scheibenkolben wirkenden Kräften ausgebildet sein.

Da die verschiedenen Arbeitsprozesse immer im gleichen Bereich der Gehäusewandung und an die gleichen Kolben angrenzend erfolgen, kann die Wandtemperatur der einzelnen Bereiche optimal auf die jeweiligen Arbeitsprozesse abgestimmt werden. Wie bereits erläutert, kann der Bereich der Gehäusewandung, innerhalb der verdichtet wird, gekühlt werden. Im Wärmetauscherbereich dagegen erfolgt eine möglichst effiziente Übertragung der im Abgas enthaltenen Wärme in die verdichtete Ladung. Die im Abgas enthaltene Wärme ist dadurch besonders groß, dass die Gehäusewand in dem Bereich, in dem die Verbrennung stattfindet und in dem dann die Abgase ausgeschoben werden, gar nicht oder so wenig wie möglich gekühlt wird. Der Abgaspfad 48 ist vorteilhafterweise thermisch isoliert, so dass das heiße Abgas unmittelbar in den Wärmetauscherbereich 50 geleitet wird. Der Wärmetauscher kann beispielsweise als Gegenstromtauscher oder als Kreuzstromtauscher ausgeführt sein. Die Scheibenkolbengeometrie kann im Wärmetauscherbereich derart sein, dass der Wärmetransport durch Quetschströmung vergrößert wird. Das Gehäuse ist im Wärmetauscherbereich vorteilhaft derart ausgebildet, dass es eine große Wärmetauschoberfläche aufweist, die beispielsweise durch eine Verrippung oder durch zusätzliche vorstehende Metallscheiben erreicht wird.

Auch der Ansaugbereich kann auf einer gegebenenfalls von der Last, unter der die Brennkraftmaschine läuft, abhängigen Temperatur gehalten werden. Bei hoher Last z.B. kann für große Füllung eine möglichst niedrige Temperatur vorteilhaft sein. Auch die Kolben, die nicht zwangsläufig die dargestellte Scheibenform haben, sondern bei entsprechender Anpassung des Gehäuses elliptischen oder runden Querschnitt haben können, sind vorteilhaft durch ihre Konstruktion, ihr Material und ihre gegenseitige Abdichtung an den jeweiligen Funktionsbereich angepasst.

Insgesamt wird mit der Erfindung eine Brennkraftmaschine geschaffen, bei der verschiedene Arbeitsräume ineinander übergehen und für den jeweiligen Prozess sowohl hinsichtlich ihres Volumens als auch hinsichtlich ihrer Wandung angepasst sind. Aus dem Arbeitsmedium, beispielsweise der Frischluft, kann gezielt Wärme abgeführt werden (z.B. während der Kompression) oder gezielt Wärme in das Arbeitsmedium eingekoppelt werden. Gleichzeitig können Wärmeverluste des Arbeitsmediums durch die Gestaltung der verschiedenen Arbeitsräume vermindert werden. Im Gegensatz zu konventionellen Hubkolbenmotoren werden die Wandungen der verschiedenen Arbeitsräume auf einem prozessgerechten Temperaturniveau gehalten, wodurch ein Verlustwärmestrom in Folge verringerter Temperaturdifferenzen zwischen Arbeitsmedium und Wandung vermindert werden kann. Prozessgerecht wird im Abgas enthaltene Wärmeenergie über einen Wärmetauscher thermodynamisch vorteilhaft in den Prozess rückgespeist.

Mit der erfindungsgemäßen Brennkraftmaschine ist es möglich, Prozesswärmeverluste zu minimieren und gleichzeitig Abwärme in dem Prozess mit hoher Effektivität einzukoppeln. Dadurch werden Wirkungsgrade erreicht, die bisher nicht möglich sind. Der erfindungsgemäße Motor eignet sich sowohl für den mobilen als auch für stationären Einsatz und kann mit unterschiedlichen Kraftstoffen betrieben werden. Die Laststeuerung kann je nach Arbeitsverfahren (Otto- oder Dieselmotor) durch Drosselung vor der Einlassöffnung, durch Steuerung der Einlassöffnung selbst und/oder durch die zugeführte Kraftstoffmenge erfolgen.

### Bezugszeichenliste

- 10: Gehäuse
- 12: Oberwand
- 14: Unterwand
- 16: Stirnwand
- 18: Stirnwand
- 20: Kurbelwelle
- 22: Einlassöffnungen
- 24: Auslassöffnungen
- 26: Abtriebslagerzapfen
- 28: Lagerfläche
- 30: Lagerfläche
- 32: Exzenterscheibe
- 34: Scheibenkolben
- 36: Gleitelement
- 37: Oberrand
- 38: Ansaugvolumen
- 40: Verdichtungsvolumen
- 42: Arbeitsvolumen
- 44: Ausstoßvolumen
- 46: Ladungspfad
- 48: Abgaspfad
- 50: Wärmetauscherbereich
- 52: Verdichtungsbereich
- 54: Verbrennungsbereich
- 55: Axialbohrung
- 56: zentrale Öffnung
- 58: Führungsfläche
- 60: Dichtleiste
- 62: Feder
- 64: Membran

## Patentansprüche

1. Verfahren zum Umwandeln thermischer Energie in mechanische Arbeit, bei welchem Verfahren eine Arbeitskammer unter Veränderung ihres Volumens bewegt wird, wobei die Arbeitskammer
- zumindest während eines Teils einer ersten Phase ihrer Bewegung unter Volumenvergrößerung mit einer Einlassöffnung verbunden wird, durch die Frischluft in die sich vergrößernde Arbeitskammer einströmt,
- anschließend von der Einlassaffnung getrennt wird und sich während einer zweiten Phase ihrer Bewegung verkleinert,
- sich während einer dritten Phase ihrer Bewegung vergrößert und
- zumindest während eines Teils einer vierten Phase ihrer Bewegung unter Volumenverkleinerung mit einer Auslassöffnung verbunden wird, und wobei
der Frischluft Brennstoff zugeführt wird, der zu Beginn der dritten Phase der Bewegung der Arbeitskammer zusammen mit der in der Arbeitskammer befindlichen verdichteten Frischluft verbrannt wird und die dabei frei werdende thermische Energie unter Vergrößerung des Volumens der Arbeitskammer in mechanische Arbeit umgewandelt wird, wobei zumindest ein Teil der thermischen Energie, die in dem während der vierten Phase der Bewegung der Arbeitskammer aus dieser ausströmenden Abgas enthalten ist, der Arbeitskammer zwischen der zweiten Phase und der dritten Phase ihrer Bewegung zugeführt wird,
**dadurch gekennzeichnet, dass**
die Arbeitskammer zwischen der zweiten und der dritten Phase ihrer Bewegung von einer Gehäusewand begrenzt wird, längs der an ihrer von der Arbeitskammer abgewandten Seite Abgas strömt, so dass zwischen der zweiten und dritten Phase der Bewegung der Arbeitskammer eine Wärmetauscherphase liegt, während der der Arbeitskammer im Abgas enthaltene thermische Energie mittels Wärmetausch durch die Gehäusewand hindurch zugeführt wird.

2. Verfahren nach Anspruch 1, **dadurch gekennzeichnet, dass** das Volumen der Arbeitskammer während der Wärmetauscherphase im Wesentlichen konstant bleibt.

3. Verfahren nach Anspruch 1 oder 2, **dadurch gekennzeichnet, dass** die Arbeitskammer während der zweiten Phase ihrer Bewegung gekühlt wird.

4. Verfahren nach einem der Ansprüche 1 bis 3, **dadurch gekennzeichnet, dass** die Wandungen der Arbeitskammer und ein durch die Wandung erfolgender thermischer Energiefluss derart sind, dass der Wirkungsgrad der während der vier Bewegungsphasen erfolgenden Umwandlung thermischer Verbrennungsenergie in mechanische Arbeit günstig beeinflusst wird.

5. Verfahren nach einem der Ansprüche 1 bis 4, **dadurch gekennzeichnet, dass** die Arbeitskammer sich zyklisch durch ein Gehäuse bewegt, dessen stationäre Wand zusammen mit einer beweglichen Wand die Arbeitskammer begrenzt, welche bewegliche Wand derart mit einer Abtriebswelle gekoppelt ist, dass die Bewegung der beweglichen Wand durch die Drehstellung der Abtriebswelle bestimmt wird, so dass die bei der Bewegung der beweglichen Wand während der dritten Phase der Bewegung der Arbeitskammer durch die Verbrennung entstehende thermische Energie zumindest teilweise in mechanische Energie der dadurch drehangetriebenen Abtriebswelle umgesetzt wird.

6. Verfahren nach Anspruch 5, **dadurch gekennzeichnet, dass** der Bereich des Gehäuses, der die Arbeitskammer während der zweiten Phase der Bewegung begrenzt, gekühlt wird.

7. Verfahren nach Anspruch 5 oder 6, **dadurch gekennzeichnet, dass** die Bewegungsgeschwindigkeit der Arbeitskammer bei konstanter Drehzahl der Abtriebswelle ungleichförmig ist.

8. Verfahren nach einem der Ansprüche 5 bis 8, **dadurch gekennzeichnet, dass** die Bewegung der Arbeitskammer parallel zur Achse der Abtriebswelle erfolgt und die Einströmrichtung der Frischluft während der ersten Bewegungsphase und die Ausströmrichtung des Abgases während der vierten Bewegungsphase gleich der Bewegungsrichtung der Arbeitskammer sind.

9. Brennkraftmaschine, enthaltend
eine mit axial nebeneinander angeordneten, zueinander versetzten Exzenterscheiben (32) ausgebildete Kurbelwelle (20),
eine Vielzahl von Kolben (34), von denen jeder eine Durchgangsöffnung (56) aufweist, in der eine Exzenterscheibe in einer senkrecht zur Achse der Kurbelwelle stehenden Ebene relativ zu dem jeweiligen Kolben in einer ersten Richtung beweglich geführt ist,
ein von der Kurbelwelle durchdrungenes Gehäuse (10) mit einer Einlassöffnung (22) an einem Ende und einer Auslassöffnung (24) am anderen Ende,
an dessen Innenflächen die Kolben senkrecht zur Achse der Kurbelwelle in einer zu der ersten Richtung senkrechten Richtung beweglich geführt sind, wobei der Versatz der Exzenterscheiben, die Außenkontur der Kolben und die Innenkontur des Gehäuses derart sind,
dass zwischen den Kolben und dem Gehäuse Arbeitskammern (38, 40, 42, 44) entstehen, die sich bei Drehung der Kurbelwelle unter Volumenänderung zyklisch axial durch das Gehäuse bewegen,
wobei das Volumen jeweils einer der sich zyklisch bewegenden, von jeweils anderen der Kolben und anderen Bereichen des Gehäuses begrenzten Arbeitskammer
- ausgehend von der Einlassöffnung während einer ersten Phase auf ein maximales Ansaugvolumen (38) zunimmt,
- anschließend von der Einlassöffnung getrennt wird und sich während einer zweiten Phase ihrer Bewegung unter Bildung eines minimalen Verdichtungsvolumens (40) verkleinert,
- sich während einer dritten Phase ihrer Bewegung bis zur Bildung eines maximalen Arbeitsvolumens (42) vergrößert und
- zumindest während eines Teils einer vierten Phase ihrer Bewegung unter Volumenverkleinerung mit der Auslassöffnung verbunden ist, und
weiter enthaltend
eine Brennstoffzufuhreinrichtung, mit der einer Arbeitskammer zuführbarer Frischluft oder in der Arbeitskammer befindlicher Frischluft Brennstoff derart zuführbar ist, dass zu Beginn der dritten Phase der Bewegung der Arbeitskammer eine Verbrennung von mit der Frischluft vermischtem Brennstoff erfolgt, wobei zumindest ein Teil der dabei frei werdenden thermischen Energie infolge der Vergrößerung der Arbeitskammer in Drehenergie der Kurbelwelle umgewandelt wird, und
weiter enthaltend
eine Energierückführeinrichtung (48, 50), mit der zumindest ein Teil der thermischen Energie, die in dem während der vierten Phase der Bewegung der Arbeitskammer aus dieser ausströmenden Abgas enthalten ist, der Arbeitskammer durch die Wand des Gehäuses (10) im Bereich zwischen der zweiten und der dritten Phase der Bewegung der Arbeitskammer zugeführt wird, welche Energierückführeinrichtung dadurch gebildet ist, dass eine an die Auslassöffnung (24) angeschlossene Abgasleitung (48) in wärmeübertragender Berührung mit einem Wärmetauscherbereich (50) des Gehäuses (10) ist, der sich an den Bereich anschließt, in dem das Verdichtungsvolumen (40) minimal ist und in dem Bereich endet, in dem die Verbrennung einsetzt.

10. Brennkraftmaschine nach Anspruch 9, wobei die Kurbelwelle (20) und die Kolben (34) derart ausgebildet sind, dass das Volumen der Arbeitskammer während einer zwischen der zweiten Phase und der dritten Phase ihrer Bewegung liegenden Wärmetauscherphase, während der die Zufuhr der thermischen Energie des Abgases erfolgt, im Wesentlichen konstant ist.

11. Brennkraftmaschine nach Anspruch 9 oder 10, wobei der Bereich des Gehäuses, längs dessen die zweite Phase der Bewegung der Arbeitskammer erfolgt, kühlbar ist.

12. Brennkraftmaschine nach einem der Ansprüche 9 bis 11, wobei der Bereich des Gehäuses, längs dessen die dritte und die vierte Phase der Bewegung der Arbeitskammer erfolgen, thermisch isolierend ist.

13. Brennkraftmaschine nach einem der Ansprüche 9 bis 12, wobei das Gehäuse (10) längs seiner Achse einen rechteckigen Innenquerschnitt aufweist und die Kolben (34) eine etwa dem Abstand sich gegenüberliegender Innenseiten des Gehäuses entsprechende Breite und eine Höhe aufweisen, die der Innenhöhe des Gehäuses abzüglich dem Doppelten der Exzentrizität der zugehörigen Exzenterscheiben (32) entspricht.

14. Brennkraftmaschine nach einem der Ansprüche 9 bis 13, wobei die Kolben (34) rechteckige Durchgangsöffnungen (56) aufweisen, in denen ein auf der zugehörigen Exzenterscheibe (32) gelagertes Gleitelement (36) senkrecht zur Bewegungsrichtung der Scheibenkolben verschiebbar geführt ist.

15. Brennkraftmaschine nach einem der Ansprüche 9 bis 14, wobei die Kolben als Scheibenkolben (34) ausgebildet sind, die an zwei sich gegenüberliegenden Rändern an sich gegenüberliegenden Innenseiten des Gehäuses (10) verschiebbar geführt sind.

16. Brennkraftmaschine nach Anspruch 15, wobei zumindest ein Teil der Außenränder der Scheibenkolben (34) elastisch nach außen vorgespannte Dichtleisten (60) trägt.

17. Brennkraftmaschine nach Anspruch 15 oder 16, wobei die Scheibenkolben (34) mittels elastisch vorgespannter Dichtleisten (60) gegeneinander abgedichtet sind.

18. Brennkraftmaschine nach einem der Ansprüche 9 bis 17, wobei an den Stirnseiten des Gehäuses oben und unten je eine Einlassöffnung (22₁, 22₂) bzw. eine Auslassöffnung (24₁, 24₂) ausgebildet sind, zwischen denen sich die Arbeitskammern bewegen.

## Claims

1. Method for converting thermal energy into mechanical work, in which method a work chamber is moved while changing its volume, wherein the work chamber
- is connected with an intake opening at least during one portion of a first phase of its movement while increasing its volume, fresh air flowing into the enlarging work chamber through the intake opening,
- is subsequently disconnected from the intake opening and decreases during a second phase of its movement,
- enlarges during a third phase of its movement and
- is connected with an exhaust opening at least during a portion of a fourth phase of its movement while decreasing its volume, and wherein
combustible fuel, which will be combusted together with the compressed fresh air located in the work chamber, is fed into the fresh air at the beginning of the third phase of the movement of the work chamber and the thus-released thermal energy is converted into mechanical work while enlarging the volume of the work chamber, wherein
at least a portion of the thermal energy, which is contained in the exhaust gas that flows out of the work chamber during the fourth phase of the movement of the work chamber, is supplied to the work chamber between the second phase and the third phase of its movement,
**characterized in that**
between the second and the third phase of its movement, the work chamber is bordered by a housing wall, along which exhaust gas flows on its side facing away from the work chamber, so that a heat exchanging phase exists between the second and third phase of the movement of the work chamber, during which thermal energy contained in the exhaust gas is supplied through the housing wall to the work chamber by means of heat exchange.

2. Method according to claim 1, **characterized in that** the volume of the work chamber remains substantially constant during the heat exchange phase.

3. Method according to claim 1 or 2, **characterized in that** the work chamber is cooled during the second phase of its movement.

4. Method according to one of claims 1 to 3, **characterized in that** the walls of the work chamber and a thermal energy flow taking place through the wall are such that the efficiency of the conversion of the thermal combustion energy into mechanical work taking place during the four movement phases is favorably influenced.

5. Method according to one of claims 1 to 4, **characterized in that** the work chamber is cyclically moved through a housing, whose stationary wall borders the work chamber together with a movable wall, which movable wall is coupled with a driven shaft such that the movement of the movable wall is determined by the rotational position of the driven shaft, so that the thermal energy generated the combustion when the movable wall moves during the third phase of the movement of the work chamber is converted at least partially into mechanical energy of the driven shaft rotatably driven thereby.

6. Method according to claim 5, **characterized in that** the area of the housing, which borders the work chamber during the second phase of the movement, is cooled.

7. Method according to claim 5 or 6, **characterized in that** the movement speed of the work chamber is non-uniform at a constant rotational speed of the driven shaft.

8. Method according to one of claims 5 to 8, **characterized in that** the movement of the work chamber takes place parallel to the axis of the driven shaft and the flow-in direction of the fresh air during the first movement phase and the flow-out direction of the exhaust gas during the fourth movement phase are identical to the movement direction of the work chamber.

9. Internal combustion engine, comprising
a crankshaft (20) formed with eccentric discs (32) disposed axially adjacent to each other and offset relative to each other,
a plurality of pistons (34), each of which having a through-opening (56), in which one eccentric disc is movably guided in a first direction relative to each respective piston in a plane that is perpendicular to the axis of the crankshaft,
a housing (10) penetrated by the crankshaft and having an intake opening (22) at one end and an exhaust opening (24) at the other end,
on whose inner surfaces the pistons are movably guided perpendicular to the axis of the crankshaft in a direction perpendicular to the first direction, wherein the offset of the eccentric discs, the outer contour of the pistons and the inner contour of the housing are such that work chambers (38, 40, 42, 44) exist between the pistons and the housing, which work chambers cyclically move through the housing while changing volume when the crankshaft rotates,
wherein the volume of each one of the cyclically-movable work chambers, which is each bordered by other pistons and other areas of the housing,
- starting from the intake opening, increases during a first phase to a maximal intake volume (38),
- is subsequently disconnected from the intake opening and decreases during a second phase of its movement while forming a minimal compressed volume (40),
- enlarges during a third phase of its movement up to the formation of a maximal work volume (42) and
- is connected with the exhaust opening at least during a portion of a fourth phase of its movement while decreasing its volume, and
further comprising
a combustible fuel supply device, with which fuel is supplyable to fresh air supplyable into a work chamber or located in the work chamber, such that a combustion of the combustible fuel mixed with the fresh air takes place at the beginning of the third phase of the movement of the work chamber, wherein at least a portion of the thus-released thermal energy is converted into rotational energy of the crankshaft due to the enlargement of the work chamber, and
further comprising
an energy feedback device (48, 50), with which at least a portion of the thermal energy, which is contained in the exhaust gas flowing out of the work chamber during the fourth phase of the movement of the work chamber, is supplied to the work chamber through the wall of the housing (10) in the area between the second and the third phase of the movement of the work chamber, which energy feedback device is formed such that an exhaust gas conduit (48) connected to the exhaust opening (24) is in heat-exchanging contact with a heat-exchanging area (50) of the housing (10), which heat-exchanging area (50) connects to the area, in which the compressed volume (40) is minimal, and ends in the area, in which the combustion starts.

10. Internal combustion engine according to claim 9, wherein the crankshaft (20) and the pistons (34) are formed such that the volume of the work chamber is substantially constant during a heat-exchanging phase that takes place between the second phase and the third phase of the movement of the work chamber, during which the supply of the thermal energy of the exhaust gas takes place.

11. Internal combustion engine according to claim 9 or 10, wherein the area of the housing, along which the second phase of the movement of the work chamber takes place, is coolable.

12. Internal combustion engine according to one of claims 9 to 11, wherein the area of the housing, along which the third and the fourth phase of the movement of the work chamber takes place, is thermally isolated.

13. Internal combustion engine according to one of claims 9 to 12, wherein the housing (10) has a rectangular inner cross-section along its axis and the pistons (34) have a width and a height that corresponds approximately to the spacing of the opposing inner sides of the housing, which corresponds to the inner height of the housing less twice the eccentricity of the associated eccentric discs (32).

14. Internal combustion engine according to one of claims 9 to 13, wherein the pistons (34) have rectangular through-openings (56), in which a slide element (36) borne on the associated eccentric disc (32) is displaceably guided perpendicular to the movement direction of the disc piston.

15. Internal combustion engine according to one of claims 9 to 14, wherein the pistons are formed as disc pistons (34) that are displaceably guided on opposing inner sides of the housing (10) on two opposing edges.

16. Internal combustion engine according to claim 15, wherein at least a portion of the outer edges of the disc piston (34) carries elastically-, outwardly-biasing sealing beads (60).

17. Internal combustion engine according to claim 15 or 16, wherein the disc pistons (34) are sealed against each other by elastically-biasing sealing beads (60).

18. Internal combustion engine according to one of claims 9 to 17, wherein an intake opening (22₁, 22₂) and an exhaust opening (24₁, 24₂), respectively, are formed above and below on the end sides of the housing, between which openings the work chambers move.

## Revendications

1. Procédé pour transformer de l'énergie thermique en travail mécanique, dans lequel une chambre de travail est déplacée en modifiant son volume, dans lequel la chambre de travail
- est reliée au moins pendant une partie d'une première phase de son déplacement, en augmentant de volume, à une ouverture d'admission à travers laquelle de l'air frais pénètre dans la chambre de travail qui s'agrandit,
- est séparée ensuite de l'ouverture d'admission et en diminuant de volume pendant une deuxième phase de son déplacement,
- s'agrandit pendant une troisième phase de son déplacement, et
- est reliée à une ouverture d'évacuation au moins pendant une partie d'une quatrième phase de son déplacement, en diminuant de volume, et dans lequel :
un combustible est acheminé à l'air frais, lequel combustible est consumé au début de la troisième phase du déplacement de la chambre de travail conjointement avec l'air frais comprimé se trouvant dans la chambre de travail et l'énergie thermique qui s'en libère se transforme en travail mécanique, tandis que le volume de la chambre de travail s'agrandit, dans lequel au moins une partie de l'énergie thermique, qui est contenue dans le gaz d'échappement s'écoulant de la chambre de travail pendant la quatrième phase du déplacement de celle-ci, est acheminée à la chambre de travail entre la deuxième phase et la troisième phase de son déplacement,
**caractérisé en ce que** :
la chambre de travail est délimitée entre la deuxième phase et la troisième phase de son déplacement par une paroi de boîtier, le long de laquelle s'écoule du gaz d'échappement sur son côté opposé à la chambre de travail de manière à avoir une phase d'échange de chaleur entre la deuxième phase et la troisième phase du déplacement de la chambre de travail, pendant laquelle l'énergie thermique contenue dans le gaz d'échappement est acheminée à la chambre de travail au moyen d'un échange de chaleur à travers la paroi de boîtier.

2. Procédé selon la revendication 1, **caractérisé en ce que** le volume de la chambre de travail reste sensiblement constant pendant la phase d'échange de chaleur.

3. Procédé selon la revendication 1 ou 2, **caractérisé en ce que** la chambre de travail est refroidie pendant la deuxième phase de son déplacement.

4. Procédé selon l'une quelconque des revendications 1 à 3, **caractérisé en ce que** les parois de la chambre de travail et un flux d'énergie thermique s'effectuant à travers la paroi sont tels que le rendement de la transformation de l'énergie de combustion thermique en travail mécanique ayant lieu pendant les quatre phases de déplacement soit influencé favorablement.

5. Procédé selon l'une quelconque des revendications 1 à 4, **caractérisé en ce que** la chambre de travail se déplace de manière cyclique à travers un boîtier, dont la paroi stationnaire, conjointement avec une paroi mobile, délimite la chambre de travail, laquelle paroi mobile est couplée à un arbre de sortie de sorte que le déplacement de la paroi mobile soit déterminé par la position de rotation de l'arbre de sortie de sorte que l'énergie thermique obtenue lors du déplacement de la paroi mobile pendant la troisième phase du déplacement de la chambre de travail par la combustion soit convertie au moins partiellement en énergie mécanique de l'arbre de sortie ainsi entraîné en rotation.

6. Procédé selon la revendication 5, **caractérisé en ce que** la zone du boîtier, qui délimite la chambre de travail pendant la deuxième phase du déplacement, est refroidie.

7. Procédé selon la revendication 5 ou 6, **caractérisé en ce que** la vitesse de déplacement de la chambre de travail est inégale à vitesse de rotation constante de l'arbre de sortie.

8. Procédé selon l'une quelconque des revendications 5 à 8, **caractérisé en ce que** le déplacement de la chambre de travail s'effectue parallèlement à l'axe de l'arbre de sortie et la direction d'admission de l'air frais pendant la première phase de déplacement et la direction d'évacuation du gaz d'échappement pendant la quatrième phase de déplacement sont identiques à la direction de déplacement de la chambre de travail.

9. Moteur à combustion interne, comportant :
un vilebrequin (20) formé de disques d'excentrique (32) agencés axialement l'un à côté de l'autre et décalés l'un par rapport à l'autre,
une pluralité de pistons (34), dont chacun présente une ouverture de passage (56), dans laquelle un disque d'excentrique est guidé mobile dans le plan perpendiculaire à l'axe du vilebrequin par rapport au piston respectif dans une première direction,
un boîtier (10) traversé par le vilebrequin avec une ouverture d'admission (22) à une extrémité et une ouverture d'évacuation (24) à l'autre extrémité,
sur surfaces internes duquel les pistons sont guidés perpendiculairement à l'axe du vilebrequin dans une direction perpendiculaire à la première direction, dans lequel le décalage des disques d'excentrique, le contour externe des pistons et le contour interne du boîtier sont tels qu'entre les pistons et le boîtier, il se forme des chambres de travail (38, 40, 42, 44), qui se déplacent de manière cyclique axialement à travers le boîtier lors d'une rotation du vilebrequin en modifiant leur volume,
dans lequel le volume respectivement d'une des chambres de travail se déplaçant de manière cyclique et délimitées respectivement par un autre des pistons et d'autres zones du boîtier
- augmente à partir de l'ouverture d'admission pendant une première phase à un volume d'aspiration maximal (38),
- est ensuite séparé de l'ouverture d'admission et diminue pendant une deuxième phase de son déplacement, tout en formant un volume de compression minimal (40),
- s'agrandit pendant une troisième phase de son déplacement jusqu'à former un volume de travail maximal (42), et
- est relié au moins pendant une partie d'une quatrième phase de son déplacement, par diminution de volume, à l'ouverture d'admission, et
contenant en outre :
un dispositif d'acheminement de combustible, avec lequel combustible peut être acheminé à de l'air frais acheminable à une chambre de travail ou se trouvant dans la chambre de travail de sorte qu'au début de la troisième phase du déplacement de la chambre de travail, il s'effectue une combustion du combustible mélangé à l'air frais, au moins une partie de l'énergie thermique qui s'en libère ainsi étant transformée en énergie de rotation du vilebrequin à la suite de l'agrandissement de la chambre de travail, et
contenant en outre :
un dispositif de recyclage d'énergie (48, 50), avec lequel au moins une partie de l'énergie thermique, qui est contenue dans le gaz d'échappement s'écoulant de la chambre de travail pendant la quatrième phase du déplacement de celle-ci, est acheminée à la chambre de travail à travers la paroi du boîtier (10) dans la zone entre la deuxième phase et la troisième phase du déplacement de la chambre de travail, lequel dispositif de recyclage d'énergie est formé de sorte qu'une conduite de gaz d'échappement (48) raccordée à l'ouverture d'évacuation (24) soit en contact de transmission de chaleur avec une zone d'échange de chaleur (50) du boîtier (10), qui est raccordée à la zone dans laquelle le volume de compression (40) est minimal et se termine dans la zone dans laquelle la combustion débute.

10. Moteur à combustion interne selon la revendication 9, dans lequel le vilebrequin (20) et les pistons (34) sont conformés de sorte que le volume de la chambre de travail pendant une phase d'échange de chaleur située entre la deuxième phase et la troisième phase de son déplacement, pendant laquelle l'acheminement de l'énergie thermique du gaz d'échappement s'effectue, soit sensiblement constante.

11. Moteur à combustion interne selon la revendication 9 ou 10, dans lequel la zone du boîtier, le long de laquelle la deuxième phase du déplacement de la chambre de travail s'effectue, peut être refroidie.

12. Moteur à combustion interne selon l'une quelconque des revendications 9 à 11, dans lequel la zone du boîtier, le long de laquelle la troisième phase et la quatrième phase du déplacement de la chambre de travail s'effectuent, est thermoisolante.

13. Moteur à combustion interne selon l'une quelconque des revendications 9 à 12, dans lequel le boîtier 10) présente le long de son axe une section transversale interne rectangulaire et les pistons (34) présentent une largeur correspondant approximativement à la distance des côtés internes opposés du boîtier et une hauteur qui correspond à la hauteur interne du boîtier moins le double de l'excentricité des disques d'excentrique correspondants (32).

14. Moteur à combustion interne selon l'une quelconque des revendications 9 à 13, dans lequel les pistons (34) présentent des ouvertures de passage (56) rectangulaires, dans lesquelles un coulisseau (36) monté sur le disque d'excentrique correspondant (32) est guidé de manière à pouvoir se déplacer perpendiculairement à la direction de déplacement des pistons à disques.

15. Moteur à combustion interne selon l'une quelconque des revendications 9 à 14, dans lequel les pistons se présentent sous la forme de pistons à disques (34), qui sont guidés de manière à pouvoir se déplacer sur deux bords opposés des côtés internes opposés du boîtier (10).

16. Moteur à combustion interne selon la revendication 15, dans lequel au moins une partie des bords externes des pistons à disques (34) porte des baguettes d'étanchéité (60) précontraintes vers l'extérieur de manière élastique.

17. Moteur à combustion interne selon la revendication 15 ou 16, dans lequel les pistons à disques (34) sont mutuellement étanchés au moyen de baguettes d'étanchéité (60) précontraintes de manière élastique.

18. Moteur à combustion interne selon l'une quelconque des revendications 9 à 17, dans lequel sont formées, sur les côtés frontaux du boîtier, en haut et en bas, respectivement une ouverture d'admission (22₁, 22₂) ou une ouverture d'évacuation (24₁, 24₂), entre lesquelles les chambres de travail se déplacent.
